# EUROPEAN PATENT SPECIFICATION

(11) **EP 3 855 616 B1**
(45) Date of publication and mention of the grant of the patent: **07.08.2024**
(21) Application number: 19861625.2
(22) Date of filing: 19.09.2019
(51) Int. Cl.: H02S 10/40, H02S 30/20, H02S 20/32

(54) **PORTABLE FOLDABLE SOLAR TRACKER**
TRAGBARER FALTBARER SONNENNACHFÜHRER
SUIVEUR SOLAIRE PLIABLE ET PORTATIF

(30) Priority: 20.09.2018 ES 201831431 U
(43) Date of publication of application: 28.07.2021
(73) Proprietor: Solarbox Solar Solutions, S.L, 26580 Arnedo La Rioja (ES); Generaciones Fotovoltaicas de la Mancha, S.L., 45860 Villacañas Toledo (ES)
(72) Inventor: COMENDADOR ROMERO, Francisco, 45860 Villacañas (Toledo) (ES); MAQUEDA TELLO, Vicente, 45860 Villacañas (Toledo) (ES); HERNÁNDEZ BAZÁN, Javier, 45860 Villacañas (Toledo) (ES)
(74) Representative: Rodriguez Oca, Jesus
(86) International application number: PCT/ES2019/070622
(87) International publication number: WO 2020/058552

(56) References cited:
- EP-A1- 2 653 803
- CN-A- 101 860 268
- CN-A- 103 001 542
- CN-A- 108 880 411
- CN-A- 109 067 324
- CN-U- 205 356 237
- KR-A- 20160 120 822
- KR-B1- 101 102 381

## Description

The present invention relates to a portable foldable solar tracker, the solar tracker being a single-axis solar tracker of the type including a series of photovoltaic solar panels or modules arranged on a support, said supports being swivelled to maximize the capture of solar energy at any time and in any location.

The solar tracker of the invention, due to its configuration and structure, allows its easy and quick transport, being able to be transported as far as necessary when contained in a suitable container, for example in a maritime container for the transport of same by ship, to any place in the world where photovoltaic power is required. This energy can be used both for rural electrification and for pumping water, being able to supply electric power to any part of the planet, no matter how remote. It is ideal for electrification in a plurality of applications related to various fields: refugee camps, military settlements, rural electrification in remote areas, aid camps in the third world, agricultural holdings with irrigation systems, etc. Likewise, due to its modular stackable configuration, it can be folded and unfolded easily and quickly, without the need for expensive machinery and infrastructures.

For that purpose, the solar tracker of the invention comprises three modules formed by two frames having a triangular prismatic structure which can be stacked one on top of the other and extended and unfolded relative to one another in a partially superimposed manner by means of corresponding telescopic lifters contained in the frame.

Solar trackers that have a degree of freedom are well known in the prior art, known in the sector as single-axis solar trackers, which are made up of a series of photovoltaic solar panels or modules each placed on a support, said supports being swivellable to obtain the maximum solar radiation from the panels at all times. For example, document WO2010089435 describes a solar tracker of this type.

EP2653803A1, discloses a photovoltaic unit wherein the unit has a supporting structure (2) for supporting a photovoltaic module (1), where the unit is attachable and/or loosely stored on a ground by weights and/or pegs. The supporting structure comprises two side pieces (3) and upper and lower connectors (4) that interconnect the side pieces. The supporting structure comprises a storage region and a fastening region, where the module is attached on the fastening region. The storage region and the fastening region define a storage plane and a mounting plane. The supporting structure is formed from metallic tubes and/or metal profiles.

CN101860268A discloses a folding solar photovoltaic panel fixing device including a main frame, an angle gauge, a stretching mechanism, and a photovoltaic panel fixing frame, which is characterized in that a lower end of a peripheral frame in the main frame has folding mounting rods, and two sides of the upper end are hinged to the two photovoltaic panel fixing frames, and the angle gauge is fixedly installed on one side of the upper end; the peripheral frame.

CN205356237U discloses a portable A -frame for photovoltaic power generation including a support portion and a rotation section, wherein the support portion includes at least two horizontally disposed horizontal beams, the two ends of adjacent level beam connect respectively through triangular plate, being provided with rotating shaft between the top of two triangular plates, and wherein the rotating shaft is installed below a motor.

These solar trackers known from the prior art are permanently installed, for example in so-called gardens, anchored to the surface of the ground, in such a way that they constitute a permanent photovoltaic power generation facility or plant.

However, in view of possible specific energy requirements in areas of difficult access or in areas with little technological development, the implementation of this type of permanent infrastructures entails high costs for both construction and trained personnel and maintenance, making its practical implementation practically unfeasible.

The single-axis portable solar tracker of the invention solves these disadvantages of known solar trackers, providing a portable solar tracker easily transportable in stacked state where it is needed, easy to install and to bring into operation, as well as easily detachable and stackable after its use, constituting a solution to the energy problem in isolated areas and with difficult access to the electrical mains, as well as reducing pollution using clean energy.

As mentioned above, the solar tracker of the invention is made up of three modules formed by two frames having a triangular prismatic structure which can be stacked one on top of the other and extended and unfolded relative to one another in a partially superimposed manner by means of corresponding telescopic lifters contained in the frame.

The invention is described below based on an embodiment thereof and with reference to the attached figures, in which:
Figure 1: schematic perspective view of the solar tracker of the invention showing the three modules that make it up in a fully unfolded state.
Figure 2: schematic perspective view of the solar tracker of figure 1 showing the three modules that make it up in a partially unfolded state.
Figure 3: schematic perspective view of the first module of the solar tracker in Figure 1, in a partially unfolded state.
Figure 4: partial schematic front view of a detail of the modules.
Figure 5: view of the folded and stacked modules.
Figure 6: detail of the view of figure 5.

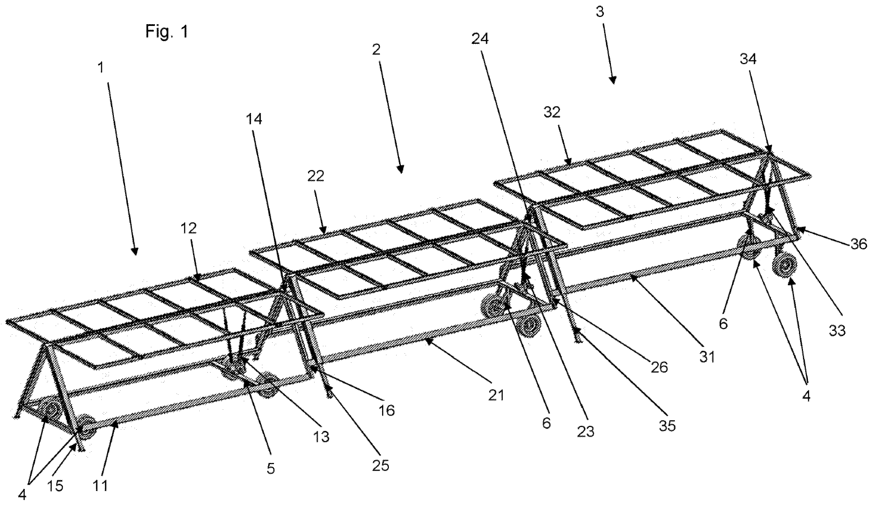

As can be seen in Figure 1, the solar tracker of the invention consists of three modules (1, 2, 3), of which the second and third are the same, so only one of them (2) will be described in the present description, being the indicated for module (2) equally applicable to module (3).

Features that are the same or essentially the same in all three modules are described below.

The modules (1, 2, 3) are formed by frames with a triangular prismatic structure (11, 21, 31). On the upper lateral ridge of each of the modules there are arranged corresponding supports (12, 22, 32) intended to house solar panels (not shown).

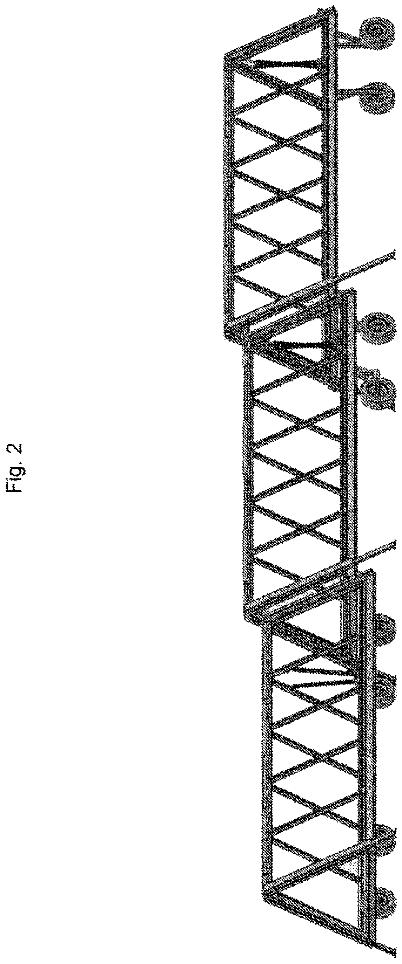

As shown in this figure 1 and in figure 2, the supports (12, 22, 32) form a grid and are attached to the upper ridge of each of the modules in a hinged way for their folding/unfolding. To this end, each frame (11, 21, 31) includes actuators (13, 23, 33) for folding/unfolding the solar panels (not shown) associated to each semi-grid, taking these actuators the panels of each semi-grid to their position of coplanar or intersecting when they fully or partially fold or unfold independently.

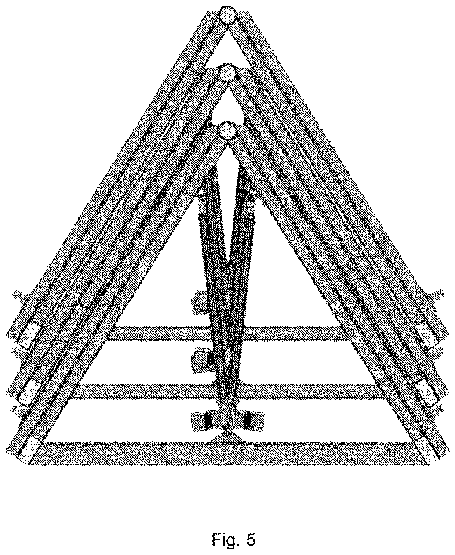

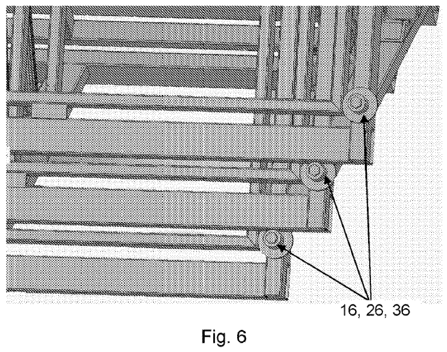

The upper lateral ridge of each module (1, 2, 3) is longitudinally extended at one of its ends defining respective support extensions (14, 24, 34) intended to support the module arranged in each case adjacent to its top. Ridges defining triangular faces of this end of each module also have stops (16, 26, 36) in its bottom that support each module arranged adjacent in unfolded state and each module arranged above it in stacked state (see Figures 5 and 6).

Likewise, to achieve this arrangement of adjacent modules, each frame (11, 21, 31) includes, in the two ridges that define triangular faces, at the end of the frame opposite the support extensions (14, 24, 34), corresponding telescopic lifters (15, 25, 35) extendable towards the ground, the extension of each one being adapted independently of both the ground where the solar tracker is located and the necessary height difference of the modules when they are arranged adjacent and partially superimposed on each other by means of the support extensions (14, 24, 34).

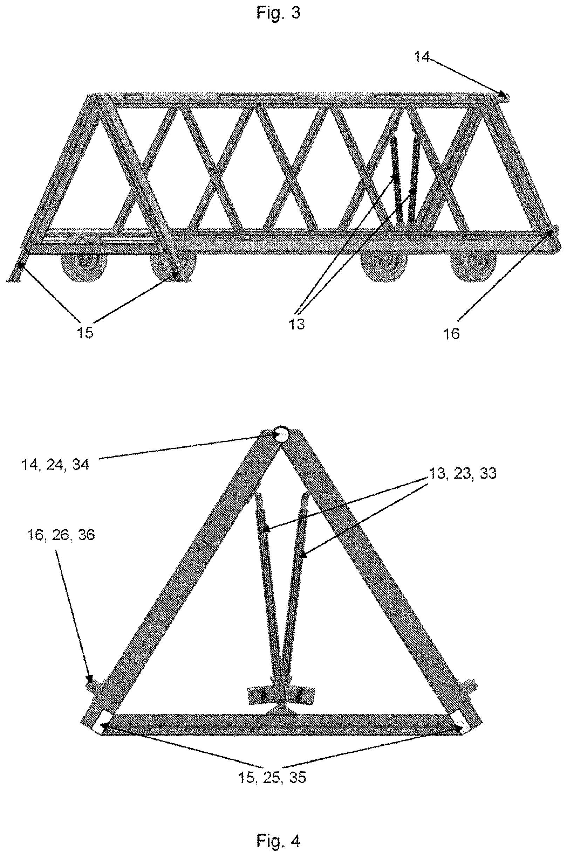

In this regard, see in particular figure 3. In this figure, although the first module (1) of the device of the invention is specifically shown, the description of the support extensions (14, 24, 34), the telescopic lifters (15, 25, 35) and the stops (16, 26, 36) is equally applicable to the modules (2, 3).

Figure 4 shows in detail one of the support extensions and two of the module stops, not showing other elements for greater clarity.

With reference to Figure 3, the lower face defined by the frame (11) of the first module (1) has four wheels (4) arranged two by two, a first pair of wheels essentially at the lower apexes of the triangular face opposite to the arrangement of the telescopic lifters (13), and a second pair at a certain distance from the apexes of the opposite triangular face and supported by a transverse bar (5).

As for the modules (2, 3), they have a single pair of wheels (4) also arranged on a cross bar (5) by means of a pivotable fixation in height (6) at the lower apexes of the triangular face associated to the lifters (23, 33). This pivotable fixation in height (6) allows the wheels in these modules to be always in contact with the ground when the modules are arranged adjacently, partially superimposed and raised with respect to each other, as shown in figures 1 and 2.

In one embodiment, triangular prismatic structure frames (11, 21, 31) and supports (12, 22, 32) intended to house the solar panels are made of steel.

Likewise, in another embodiment, actuators (13, 23, 33) for folding/unfolding solar panels are automated, so that their folding/unfolding is carried out automatically.

Given the special configuration of the solar tracker of the invention, it constitutes a portable energy solution, the modules that constitute it being stacked one on top of the other and being able to be introduced in this stacked state, for example, in a container, for easy transport of same together with the corresponding panels, as well as with all the equipment necessary for its operation, such as mixed systems of coupling in AC bus and DC bus of the energy generated by photovoltaic panels (AC coupling is used for direct consumption of solar energy, while DC coupling allows direct charging of energy storage batteries), lithium ferro-phosphate batteries, monitoring and control systems, geolocation positioning systems, etc.

## Claims

1. A portable foldable solar tracker, the solar tracker being a single-axis solar tracker of the type including a series of photovoltaic solar panels arranged on a support, said supports being swivelled to maximize the capture of solar energy at any time and in any location, wherein it comprises three modules (1, 2, 3) formed by frames (11, 21, 31) having a triangular prismatic structure with corresponding supports (12 , 22, 32) intended to contain solar panels arranged on the upper lateral ridge of each of the frames (11, 21, 31) forming a grid and attached to the upper ridge of each of the modules in a hinged way for their folding/unfolding, each frame (11, 21, 31) including folding/unfolding actuators (13, 23, 33) associated to each semi-grid, wherein the frames (11, 21, 31) can be stacked one on top of the other and extended and unfolded relative to one another in a partially superimposed manner by means of corresponding telescopic lifters (15, 25, 35) contained in the frame.

2. The portable foldable solar tracker according to claim 1, **characterized in that** the upper lateral ridge of each module (1, 2, 3) is longitudinally extended at one of its ends defining respective support extensions (14, 24, 34) intended to support the module arranged adjacent in each case and **in that** the ridges that define the triangular faces of this end of each module have stops (16, 26, 36) at their bottom that support each module arranged adjacently in unfolded state and each module arranged on top in stacked state.

3. The portable foldable solar tracker according to claim 2, **characterized in that** each frame (11,21,31) includes, at the end of the frame opposite the support extensions (14, 24, 34), the telescopic lifters (15, 25, 35) extendable towards the ground.

4. The portable foldable solar tracker according to any one of the preceding claims, **characterized in that** the lower face defined by the frame (11) of the first module (1) has four wheels (4) arranged two by two, a first pair of wheels essentially at the lower apexes of the triangular face opposite the arrangement of telescopic lifters (13), and a second pair at a certain distance from the apexes of opposite triangular face and supported by a transverse bar (5).

5. The portable foldable solar tracker according to claims 1 to 4, **characterized in that** modules (2, 3) have a single pair of wheels (4) also arranged on a cross bar (5) by means of a pivotable fixation in height (6) at the lower apexes of the triangular face associated to lifters (23, 33).

## Patentansprüche

1. Tragbarer klappbarer Solartracker, wobei der Solartracker ein einachsiger Solartracker des Typs ist, der eine Reihe von photovoltaischen Solarpaneelen beinhaltet, die auf einem Träger angeordnet sind, wobei die Träger geschwenkt werden, um die Erfassung von Sonnenenergie zu jeder Zeit und an jedem Ort zu maximieren, wobei er drei Module (1, 2, 3) umfasst, die durch Rahmen (11, 21, 31) gebildet werden, die eine dreieckige Prismastruktur mit entsprechenden Trägern (12, 22, 32) aufweist, die Solarpaneele enthalten sollen, die auf der oberen seitlichen Erhöhung von jedem der Rahmen (11, 21, 31) angeordnet sind, die ein Gitter bilden und an der oberen Erhöhung von jedem der Module zu deren Ausklappen/Einklappen mit Scharnieren befestigt sind, wobei jeder Rahmen (11, 21, 31) Aktuatoren (13, 23, 33) zum Ausklappen/Einklappen beinhaltet, die mit jedem Halbgitter verknüpft sind, wobei die Rahmen (11, 21, 31) aufeinandergestapelt und relativ zueinander in einer teilweise überlagerten Weise mittels entsprechender teleskopischer Hebevorrichtungen (15, 25, 35), die im Rahmen enthalten sind, ausgefahren und eingeklappt werden können.

2. Tragbarer klappbarer Solartracker nach Anspruch 1, **dadurch gekennzeichnet, dass** die obere seitliche Erhöhung jedes Moduls (1, 2, 3) in Längsrichtung an einem seiner Enden verlängert ist, wodurch jeweilige Trägerverlängerungen (14, 24, 34) definiert werden, die das Modul, das jeweils benachbart angeordnet ist, stützen sollen, und dadurch, dass Erhöhungen, die die dreieckigen Seiten dieses Endes von jedem Modul definieren, an deren Unterseite Anschläge (16, 26, 36) aufweisen, die jedes benachbart angeordnete Modul in einem eingeklappten Zustand und jedes oben angeordnete Modul in einem gestapelten Zustand stützen.

3. Tragbarer klappbarer Solartracker nach Anspruch 2, **dadurch gekennzeichnet, dass** jeder Rahmen (11, 21, 31) am Ende des Rahmens gegenüber den Stützenverlängerungen (14, 24, 34) die teleskopischen Hebevorrichtungen (15, 25, 35) beinhaltet, die zum Boden ausfahrbar sind.

4. Tragbarer klappbarer Solartracker nach einem der vorhergehenden Ansprüche, **dadurch gekennzeichnet, dass** die untere Seite, die durch den Rahmen (11) des ersten Moduls (1) definiert wird, vier Räder (4) aufweist, die jeweils zu zweit angeordnet sind, ein erstes Paar Räder, das sich im Wesentlichen an den unteren Scheitelpunkten der dreieckigen Seite gegenüber der Anordnung von teleskopischen Hebevorrichtungen (13) befindet, und ein zweites Paar, das sich in einem gewissen Abstand von den Scheitelpunkten einer gegenüberliegenden dreieckigen Seite befindet und von einer Querstange (5) gestützt wird.

5. Tragbarer klappbarer Solartracker nach den Ansprüchen 1 bis 4, **dadurch gekennzeichnet, dass** Module (2, 3) ein einzelnes Paar Räder (4) aufweisen, das mittels einer schwenkbaren Befestigung in einer Höhe (6) an den unteren Scheitelpunkten der dreieckigen Seite, die mit Hebevorrichtungen (23, 33) verknüpft ist, ebenfalls an einer Querstange (5) angeordnet ist.

## Revendications

1. Dispositif de poursuite solaire pliable portable, le dispositif de poursuite solaire étant un dispositif de poursuite solaire mono-axe du type comportant une série de panneaux solaires photovoltaïques agencés sur un support, lesdits supports étant pivotés pour maximiser la captation de l'énergie solaire à un quelconque moment et en un quelconque lieu, dans lequel il comprend trois modules (1, 2, 3) formés par des cadres (11, 21, 31) ayant une structure prismatique triangulaire avec des supports (12, 22, 32) correspondants destinés à contenir des panneaux solaires agencés sur l'arête latérale supérieure de chacun des cadres (11, 21, 31) formant une grille et fixés à l'arête supérieur de chacun des modules de manière articulée pour leur pliage/dépliage, chaque cadre (11, 21, 31) comportant des actionneurs de pliage/dépliage (13, 23, 33) associés à chaque demi-grille, dans lequel les cadres (11, 21, 31) peuvent être empilés les uns au-dessus des autres et étendus et dépliés les uns par rapport aux autres de manière partiellement superposée au moyen d'élévateurs télescopiques (15, 25, 35) correspondants contenus dans le cadre.

2. Dispositif de poursuite solaire pliable portable selon la revendication 1, **caractérisé en ce que** l'arête latérale supérieure de chaque module (1, 2, 3) se prolonge longitudinalement au niveau de l'une de ses extrémités définissant des extensions de support (14, 24, 34) respectives destinées à supporter le module agencé adjacent dans chaque cas et **en ce que** les arêtes qui définissent les faces triangulaires de cette extrémité de chaque module ont au niveau de leur fond des butées (16, 26, 36) qui supportent chaque module agencé de manière adjacente à l'état déplié et chaque module agencé au-dessus à l'état empilé.

3. Dispositif de poursuite solaire pliable portable selon la revendication 2, **caractérisé en ce que** chaque cadre (11, 21, 31) comporte, au niveau de l'extrémité du cadre opposée aux extensions de support (14, 24, 34), les élévateurs télescopiques (15, 25, 35) extensibles vers le sol.

4. Dispositif de poursuite solaire pliable portable selon l'une quelconque des revendications précédentes, **caractérisé en ce que** la face inférieure définie par le cadre (11) du premier module (1) a quatre roues (4) agencées deux par deux, une première paire de roues essentiellement au niveau des sommets inférieurs de la face triangulaire opposée à l'agencement d'élévateurs télescopiques (13), et une seconde paire à une certaine distance des sommets de la face triangulaire opposée et supportée par une barre transversale (5).

5. Dispositif de poursuite solaire pliable portable selon les revendications 1 à 4, **caractérisé en ce que** les modules (2, 3) ont une seule paire de roues (4) également agencées sur une traverse (5) au moyen d'une fixation pivotante en hauteur (6) au niveau des sommets inférieurs de la face triangulaire associée aux élévateurs (23, 33).
